# EUROPÄISCHE PATENTANMELDUNG

(11) **EP 1 122 536 A2**
(43) Veröffentlichungstag der Anmeldung: **08.08.2001**
(21) Anmeldenummer: 01102352.0
(22) Anmeldetag: 02.02.2001
(51) Int. Cl.: G01N 21/95

(54) **Verfahren und Vorrichtung zum optischen Erkennen von lokalen Verformungen, insbesondere Bläschen, eines optischen Datenträgers**

(30) Priorität: 05.02.2000 DE 10004889
(71) Anmelder: Basler Aktiengesellschaft, 22926 Ahrensburg (DE)
(72) Erfinder: Lütjens, Dirk, 22926 Ahrensburg (DE)
(74) Vertreter: Jaeschke, Rainer, Dipl.-Ing.

(57) **Zusammenfassung**

Die Erfindung betrifft ein Verfahren und eine Vorrichtung zum optischen Erkennen von Fehlern, wie lokalen Verformungen oder Bläschen, in einem Gegenstand, insbesondere einem optischen Datenträger, bei welchem Verfahren der Gegenstand von wenigstens einer Lichtquelle mit Licht beleuchtet wird und das von dem Gegenstand reflektierte oder durchgelassene Licht von wenigstens einem lichtempfindlichen Empfänger aufgenommen wird, wobei bei einem einwandfreien Gegenstand das Licht von dem Gegenstand in einem Normausfallwinkel entlang einer Normausfallachse reflektiert oder durchgelassen wird. Gemäß der Erfindung wird vorgeschlagen, daß vor dem lichtempfindlichen Empfänger wenigstens eine Eigenschaft wenigstens eines Teils des darauf einfallenden Lichts verändert wird, wenn das Licht entlang einer von der Normausfallachse abweichenden Ausfallachse und/oder mit einem von dem Normausfallwinkel abweichenden Ausfallwinkel von dem Gegenstand reflektiert oder durchgelassen wird.

## Beschreibung

Die Erfindung betrifft ein Verfahren und eine Vorrichtung zum optischen Erkennen von Fehlern, wie lokalen Verformungen, Einschlüssen oder Bläschen, in einem Gegenstand, insbesondere einem optischen Datenträger, bei welchem Verfahren der Gegenstand von wenigstens einer Lichtquelle mit Licht beleuchtet wird und das von dem Gegenstand reflektierte oder durchgelassene Licht von wenigstens einem lichtempfindlichen Empfänger aufgenommen wird, wobei bei einem einwandfreien Gegenstand das Licht von dem Gegenstand in einem Normausfallwinkel entlang einer Normausfallachse reflektiert oder durchgelassen wird.

Ein derartiges optisches Prüfverfahren zur Inspektion von optischen Datenträgern wie CDs, CD-ROMs, DVDs oder CD-Rs, ist beispielsweise aus der DE-OS 44 34 474 bekannt. Hier wird der Datenträger mit einem linienförmigen Lichtstrahlenbündel beleuchtet. Eventuelle Verformungen werden anhand des Verlaufs der auf einem matrixförmigen Sensor abgebildeten Linie erkannt. Weiterhin ist es aus der DE-PS 197 31 545 bekannt, Verformungen einer Oberfläche dadurch zu erfassen, daß die Oberfläche mit einer Vielzahl von diskreten Leuchtdioden beleuchtet wird und die Verformung anhand einer Verschiebung der auf dem matrixförmigen Sensor abgebildeten Leuchtpunkte erkannt wird. Mit diesen Verfahren oder Vorrichtungen lassen sich jedoch nur großflächigere Verformungen und Neigungen der gesamten Oberfläche detektieren.

Im Zuge der immer größer werdenden Datendichte, die auf einem derartigen optischen Datenträger vorhanden ist, können auch kleinere Fehler zu einem fehlerhaften Auslesen des Datenträgers führen. Ein optischer Datenträger ist in der Regel schichtweise aus durchlässigen und verspiegelten oder teilverspiegelten Schichten aufgebaut. Hier können Bläschen in einer oder zwischen den Schichten vorhanden sein. Solche Bläschen bewirken zwar keine wesentlichen Auslesefehler, jedoch stellen diese Bläschen Lufteinschlüsse dar, die zu einer Langzeitschädigung des Datenträgers, insbesondere zur Korrosion der metallischen Spiegelschicht oder teildurchlässigen Spiegelschicht führen. Herkömmliche Inspektionssysteme sind nicht in der Lage, diese zum Teil kontrastarmen Einschlüsse zu detektieren. Das Erfassen solcher Fehler ist jedoch wesentlich, da diese häufig auf einen Systemfehler der Produktionslinie zurückzuführen sind und dann in nahezu allen damit hergestellten Datenträgern vorhanden sind. Eine frühzeitige Erkennung dieser Fehler zum schnellen Eingreifen in den Produktionsprozeß ist daher wünschenswert.

Der Erfindung liegt die Aufgabe zugrunde, ein Verfahren und eine Vorrichtung der eingangs geschilderten Art so auszubilden, daß eine Detektion von lokalen Verformungen, Einschlüssen und Bläschen, möglich wird.

Die Aufgabe wird gemäß der Erfindung dadurch gelöst, daß vor dem lichtempfindlichen Empfänger wenigstens eine Eigenschaft wenigstens eines Teils des auf diesen einfallenden Lichts verändert wird, wenn das Licht entlang einer von der Normausfallachse abweichenden Ausfallachse und/oder mit einem von dem Normausfallwinkel abweichenden Ausfallwinkel von dem Gegenstand reflektiert oder durchgelassen wird. Dadurch wird erreicht, daß auch bei einer kleinen lokalen Verformung und einer geringen Änderung der Richtung oder des Verlaufs des von dem Gegenstand kommenden Lichts zu einer Veränderung des Lichts selbst führt. Dadurch ist eine verbesserte Erfassung, bildliche Darstellung und anschließende Auswertung möglich.

Welche Eigenschaften des auf den lichtempfindlichen Empfänger einfallenden Lichts verändert wird, ist grundsätzlich beliebig. Es kann vorgesehen werden, daß das auf den lichtempfindlichen Empfänger einfallende Licht in seiner Intensität, seinem Intensitätsverlauf über dem lichtempfindlichen Empfänger, und/oder Polarisation verändert wird und/oder wenigstens eine Wellenlänge oder Wellenlängenbereich ausgefiltert werden. Im folgenden wird auch bei einer Veränderung der einfallenden Intensität von einer Veränderung einer Eigenschaft des Lichts gesprochen.

Es können hierzu optische Mittel eingesetzt werden, durch die das einfallende Licht über dem lichtempfindlichen Empfänger ein Profil der betreffenden Eigenschaft, insbesondere der Intensität, erhält. Das Eigenschaftsprofil weist einen detektierbaren Gradienten oder ein lokales Maximum oder Minimum auf, das sich in Abhängigkeit von dem Einfallwinkel oder der Einfallachse auf das optische Mittel relativ zum lichtempfindlichen Empfänger verschiebt. Der Gradient oder das lokale Maximum oder Minimum verläuft über dem lichtempfindlicher Empfänger, so daß die Verschiebung des Profils zu einem entsprechend veränderten, insbesondere helleren oder dunkleren Bild füht. Die Verformung aufgrund des dort anders reflektierten Strahls oder Strahlen kann erkannt werden.

Die Veränderung kann in Abhängigkeit von dem Ausmaß der Abweichung stetig erfolgen und beispielsweise stärker werden bei zunehmender Abweichung. Auch kann eine nahezu sprunghafte Änderung, beispielsweise auch stufenweise, zweckmäßig sein. Grundsätzlich wird es vorteilhaft sein, wenn die Intensität, also die Helligkeit, des einfallenden Lichts verändert wird. Eine Erfassung der Helligkeitsveränderung ist leicht möglich, und eine Darstellung der lokalen Verformung oder Bläschens kann auf einem entsprechenden Anzeigegerät bewirkt werden.

Es kann vorgesehen werden, daß die Intensität des einfallenden Lichts verringert wird, wenn das Licht in einem in die eine Richtung abweichenden Ausfallwinkel und/oder entlang einer in dieser einen Richtung verschobenen Ausfallachse reflektiert oder durchgelassen wird, und daß die Intensität des einfallenden Lichts steigt, wenn das Licht in einem in die andere Richtung abweichenden Ausfallwinkel und/oder entlang einer in dieser anderen Richtung verschobenen Ausfallachse reflektiert oder durchgelassen wird. Dies hat zur Folge, daß bei einer Ablenkung in die eine Richtung die Darstellung des Prüfobjektes dunkler und in der anderen, vorzugsweise entgegengesetzten Richtung heller wird. Als Grenzfall kann es zweckmäßig sein, wenn das einfallende Licht zu einem größeren Teil ausgeblendet wird, wenn das Licht in einem in die eine Richtung abweichenden Ausfallwinkel und/oder entlang einer in dieser einen Richtung verschobenen Ausfallachse reflektiert oder durchgelassen wird, und daß das einfallende Licht zu einem größeren Teil zu dem lichtempfindlichen Empfänger durchgelassen wird, wenn das Licht in einem in die andere Richtung abweichenden Ausfallwinkel und/oder entlang einer in dieser anderen Richtung verschobenen Ausfallachse reflektiert oder durchgelassen wird. Diese Änderung kann durch eine Blende und deren entsprechenden Positionierung im Strahlengang erreicht werden.

Grundsätzlich ist es natürlich auch möglich, daß die Intensität des einfallenden Lichts verringert oder das Licht ausgeblendet wird, wenn das Licht in einem in eine beliebige Richtung abweichenden Ausfallwinkel und/oder entlang einer in eine beliebige Richtung verschobenen Ausfallachse reflektiert oder durchgelassen wird. Umgekehrt kann vorgesehen werden, daß die Intensität des einfallenden Lichts steigt, wenn das Licht in einem in eine beliebige Richtung abweichenden Ausfallwinkel oder entlang einer in eine beliebige Richtung verschobenen Ausfallachse reflektiert oder durchgelassen wird.

In der Regel wird ein optischer Datenträger linienförmig abgetastet. Dazu wird zumindest der Datenbereich mit einem linienförmigen Licht beleuchtet, und das reflektierte oder durchgelassene Licht belichtet einen zeilenförmigen Sensor des lichtempfindlichen Empfängers. Es kann hierbei vorgesehen werden, daß die Veränderungen des einfallenden Lichts bei einer Abweichung in einer Richtung senkrecht zu der Erstreckung des zeilenförmigen Sensors erfolgt.

Es kann vorgesehen werden, daß der Gegenstand mit wenigstens einem im wesentlichen parallelen Lichtstrahlenbündel beleuchtet wird. Die auf den Gegenstand auftreffende Breite des auftreffenden Lichtstrahlenbündels kann dabei größer sein als die Breite des optisch aktiven Bereichs des lichtempfindlichen Sensors. Das reflektierte oder durchgelassene Licht kann im wesentlichen unabhängig von dem Ausfallwinkel und/oder oder der Ausfallachse in das Objektiv des lichtempfindlichen Empfängers gebündelt werden. Die Veränderung der Eigenschaft des einfallenden Lichts kann grundsätzlich an einer beliebigen Stelle nach der Reflektion oder Transmission am zu prüfenden Gegenstand erfolgen. Grundsätzlich ist es zweckmäßig, wenn die Veränderung an einer Stelle bewirkt wird, an der eine große absolute Abweichung der Lichtstrahlen vorhanden ist, insbesondere zwischen der Bündelung und dem Objektiv des lichtempfindlichen Empfängers.

Das Verfahren gemäß der Erfindung soll insbesondere die Detektion von lokalen Verformungen ermöglichen. Es ist offensichtlich, daß das Verfahren auch sensibel für großflächigere Verformungen ist, die in Form einer Neigung der Oberfläche vorliegen. Hier würde sich eine Veränderung des Lichts auf den gesamten lichtempfindlichen Empfänger, beispielsweise dessen zeilenförmigen Chip auswirken. Die gesamte Darstellung des abgetasteten Bereichs wäre somit dunkler oder heller. Hier kann vorgesehen werden, daß, wenn der Gegenstand mittels eines Lichtstreifens beleuchtet wird und der reflektierte oder durchgelassene Lichtstreifen einen zeilenförmigen optisch aktiven Sensor des lichtempfindlichen Empfängers belichtet, bei einer Veränderung wenigstens einer Eigenschaft des einfallenden Lichts über der gesamten oder näherungsweise der gesamten Länge des zeilenförmigen Sensors des lichtempfindlichen Empfängers die Veränderung nachgeregelt wird. Dadurch können Veränderungen nur aufgrund großflächiger Verformungen ausgeglichen werden. Dies hat den Vorteil, daß eine einheitlich helle Darstellung des Gegenstands erhalten wird. Die Nachregelung kann beispielsweise durch eine Veränderung der Belichtungszeit erfolgen.

Die erfindungsgemäße Vorrichtung zum optischen Erkennen von lokalen Fehlern, wie von lokalen Verformungen, Einschlüssen oder Bläschen, in einem Gegenstand, insbesondere einem optischen Datenträger, ist mit wenigstens einer Lichtquelle, die den Gegenstand von einer Seite mit Licht beleuchtet, und mit wenigstens einem lichtempfindlichen Empfänger, der das von dem Gegenstand reflektierte oder durchgelassene Licht empfängt, versehen, wobei bei einem einwandfreien Datenträger das Licht in einem Normausfallwinkel oder entlang einer Normausfallachse von dem Gegenstand reflektiert oder durchgelassen wird. Bei der erfindungsgemäßen Vorrichtung ist vor dem lichtempfindlichen Empfänger wenigstens ein optisches Mittel vorgesehen, durch das zumindest ein Teil des auf den lichtempfindlichen Empfänger einfallenden Lichts in wenigstens einer seiner Eigenschaften und/oder Intensität verändert wird, wenn das reflektierte oder durchgelassene Licht auf das optische Mittel in einem zu dem Normausfallwinkel korrespondierenden Normeinfallwinkel abweichenden Einfallwinkel und/oder entlang einer zu der Normausfallachse korrespondierenden Normeinfallachse abweichenden Einfallachse auftrifft. Das optische Mittel kann in Abhängigkeit von der Abweichung eine stetige oder nahezu sprunghafte Veränderung des einfallenden Lichts bewirken.

Der lichtempfindliche Empfänger kann wenigstens einen zeilenförmigen optisch aktiven Sensor aufweisen, und die optische Mittel können eine Veränderung des einfallenden Lichts bei einer Abweichung in einer Richtung senkrecht zu der Erstreckung des zeilenförmigen Sensors bewirken. Eine solche Ausbildung und Anordnung ist mit Blick auf die Abtastung des in der Regel kreisrunden Datenträgers in radialer Richtung über den Halb- oder Durchmesser zweckmäßig.

Eine stetige Veränderung des Lichts kann beispielsweise durch ein optische Mittel bewirkt werden, das ein Transmissionsprofil aufweist und dessen Transmission in Abhängigkeit vom Einfallwinkel und/oder der Einfallachse des Lichts auf das optische Mittel variiert. Das Transmissionsprofil kann, ausgehend von dem Normeinfallwinkel und der Normeinfallachse, eine sich in die eine Richtung verringernde Transmission aufweisen, wenn das Licht in einem in diese Richtung abweichenden Einfallwinkel und/oder Einfallachse auftrifft, und eine in die andere Richtung steigende Transmission aufweisen, wenn das Licht in einem in diese andere Richtung abweichenden Einfallwinkel und/oder Einfallachse auftrifft. Ein solches optische Mittel kann ein sich in eine Richtung senkrecht zum zeilenförmigen Sensor des lichtempfindlichen Empfängers zunehmende Tönung aufweisen, wobei sich das optische Mittel vor dem oder über das Objektiv des lichtempfindlichen Empfängers erstreckt und die Tönung von der einen zur anderen Seite des Objektivs zunimmt. Dadurch wird erreicht, daß bei einer Abweichung des Lichts in eine Richtung die Helligkeit zunimmt und bei einer Abweichung des Lichts in andere Richtung die Helligkeit abnimmt. Größere Abweichungen führen demnach zu einem noch dunkleren oder noch helleren Bild.

Eine stetige Änderung kann auch durch ein optisches Mittel erfolgen, das ein Transmissionsprofil aufweist, das, ausgehend von dem Normeinfallwinkel und der Normeinfallachse, eine sich verringernde beziehungsweise steigende Transmission aufweist, wenn das Licht in einem abweichenden Einfallwinkel und/oder einer abweichenden Normeinfallachse auf den lichtempfindlichen Empfänger auftrifft. Dieses Transmissionsprofil kann durch ein optisches Mittel mit einer sich sowohl in eine Richtung als auch in die entgegengesetzte Richtung senkrecht zum zeilenförmigen Sensor des lichtempfindlichen Empfängers abnehmende beziehungsweise zunehmende Tönung erzeugt werden, wobei sich das optische Mittel über das gesamte Objektiv des lichtempfindlichen Empfängers erstreckt und die Linie mit der minimalen beziehungsweise maximalen Tönung parallel über dem zeilenförmigen Sensor des lichtempfindlichen Empfängers angeordnet ist.

Das optische Mittel kann auch als Blende ausgebildet sein, die, ausgehend von der Normeinfallachse und des Normeinfallwinkels, eine Seite des lichtempfindlichen Empfängers abdeckt derart, daß Licht mit einem in diese Richtung abweichenden Einfallwinkel und/oder Einfallachse abgeschirmt wird, während ein in die anderer Richtung abweichendes Licht durchgelassen wird. Hierdurch wird mit einfachen Mitteln die gewünschte Änderung der Intensität des einfallenden Lichts bewirkt. Es entsteht ein Intensitätsprofil mit einem relativ großen Gradienten senkrecht zur Blendenkante von der minimalen Intensität zur maximalen Intensität. Die Blende ist dabei parallel zum zeilenförmigen Sensor des lichtempfindlichen Empfängers derart ausgerichtet, daß vorzugsweise der maximale Gradient des Profils exakt über den zeilenförmigen Sensor verläuft. Dadurch wird erreicht, daß Licht, das von einem einwandfreien Gegenstand reflekiert oder durchgelassen wird, eine mittlere Belichtung des lichtempfindlichen Empfängers bewirkt. In Richtung auf den lichtundurchlässigen Teil der Blende abgelenktes Licht bewirkt eine Verschiebung des Profils, so daß Licht mit einer geringeren oder auch minimalen Intensität den lichtempfindlichen Empfänger belichtet.

Das Bild wird dort dunkler. In die andere Richtung auf den lichtdurchlässigen Teil der Blende abgelenktes Licht bewirkt eine entgegengesetzte Verschiebung des Profils und erzeugt eine stärkere Belichtung des lichtempfindlichen Empfängers.

Das optische Mittel kann auch eine Schlitzblende sein, deren Schlitz parallel über den zeilenförmigen Sensor des lichtempfindlichen Empfängers angeordnet ist. Auch ist es möglich, daß das optische Mittel eine streifenförmige Blende umfaßt, dessen lichtundurchlässiger Streifen parallel über dem zeilenförmigen optischen Sensor des lichtempfindlichen Empfängers ausgerichtet ist. Diese Blenden erzeugen ein lokales Maximum oder Minimum des Intensitätsprofils über dem lichtempfindlichen Empfänger. Durch abgelenktes Licht erfolgt eine Verschiebung dieses Profils derart, daß der lichtempfindliche Empfänger entweder nur schwächer oder stärker belichtet wird.

Vorstehend wurde die Veränderung des einfallenden Lichts anhand einer Veränderung der Lichtstärke durch Dämpfung oder Ausblendung eines Teils des reflektierten oder durchgelassenen Lichts aus dem Strahlengang beschrieben. Grundsätzlich kann aber auch vorgesehen werden, daß das optische Mittel als Farbfilter, Polarisationsfilter oder ähnliches Filter ausgebildet ist, das, ausgehend von der Normeinfallachse und des Normeinfallwinkels, eine Seite des lichtempfindlichen Empfängers abdeckt derart, daß aus dem Licht mit einem in diese Richtung abweichenden Einfallwinkel und/oder Einfallachse eine Wellenlänge oder ein Wellenlängenbereich ausgefiltert oder polarisiert werden, während ein in die anderer Richtung abweichendes Licht durchgelassen oder davon abweichend gefiltert oder polarisiert wird. Durch die entsprechende Ausbildung eines solchen optischen Elementes kann ein entsprechendes Eigenschaftsprofil über dem lichtempfindlichen Empfänger erzeugt werden. Das Profil wird sich bei einem geänderten Lichteinfall verschieben, so daß eine Änderung detektiert wird.

Es ist offensichtlich, daß mit einer derartigen Anordnung unter anderem die Bläschen gut erfaßt werden können. Insbesondere wird sich diese Anordnung in einer Kombination von Inspektionsverfahren oder -schritten eignen, bei welcher der Gegenstand mit Hilfe eines telezentrischen Aufbaus oder eines wenig divergenten Aufbaus optisch abgetastet wird. Das auf den Gegenstand auftreffende Licht ist dann ein quasi-paralleles Lichtstrahlenbündel. Die Breite des auf den Gegenstand auftreffenden Lichtbündels kann dabei größer sein als die optisch aktive Breite des Sensors des lichtempfindlichen Empfängers. Der Gegenstand ist im parallelen Strahlenverlauf des telezentrischen Aufbaus angeordnet. Es ist dann vor dem lichtempfindlichen Empfänger eine optische Linsenanordnung, ein Achromat, vorgesehen, die das einfallende Licht im wesentlichen unabhängig von dem Einfallwinkel und der Einfallachse in das Objektiv des lichtempfindlichen Empfängers bündelt. Dies hat grundsätzlich den Vorteil, daß, ohne ein optisches Mittel gemäß der oben erläuterten Art, die optische Abtastung des Gegenstandes im wesentlichen unempfindlich gegen Änderungen in Strahlenrichtung und Verformungen ist, solange die Abweichungen im Toleranzbereich des Achromaten ist. Dies ist bei der Inspektion von Datenträgern in der Regel der Fall, da größere Abweichungen ohnehin zu Ausschuß führen. Der telezentrische Aufbau ist insbesondere für die Detektion anderer Fehler zweckmäßig.

Allerdings steht der telezentrische Aufbau demnach grundsätzlich einer Erfassung von kleinen und kleinsten lokalen geometrischen Verformungen entgegen. Erst durch das Vorsehen des erfindungsgemäßen optischen Mittels vor dem lichtempfindlichen Empfänger können die Verformungen auch bei einem telezentrischen Aufbau erkannt werden. Es ist hier zweckmäßig, wenn das reflektierte Lichtstrahlenbündel geteilt wird und zwei lichtempfindliche Empfänger belichtet, wobei nur vor einem ein derartiges optisches Mittel vorgesehen ist.

Die Erfindung wird im folgenden anhand der schematischen Zeichnung näher erläutert. Es zeigen:

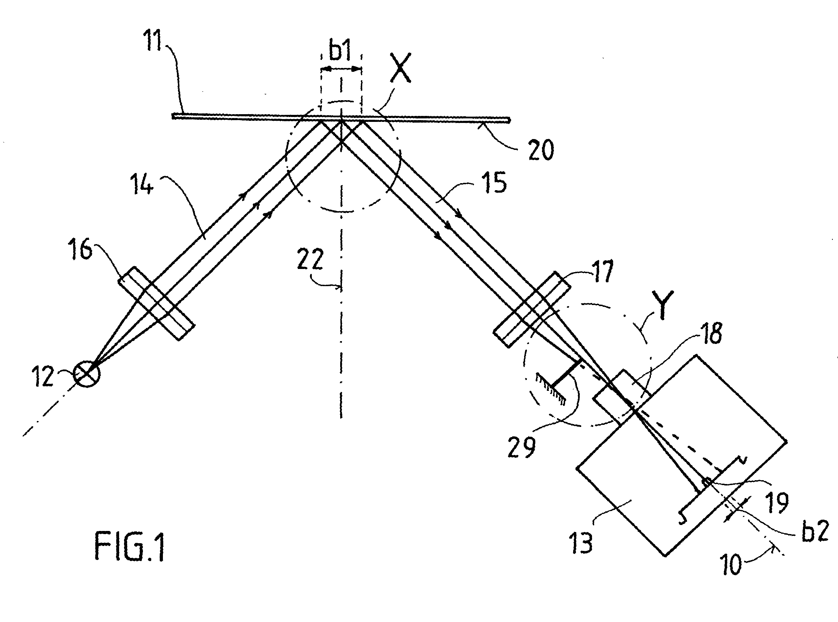

- Fig. 1: die Ansicht auf eine Prüfvorrichtung gemäß der Erfindung,

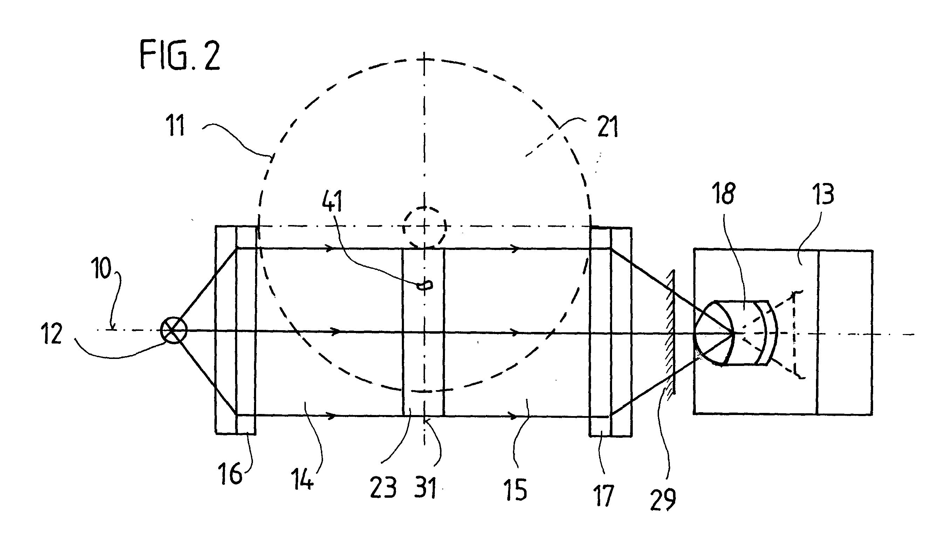

- Fig. 2: die Draufsicht auf die Prüfvorrichtung gemäß Fig. 1,
- Fig. 3: die Einzelheit X in Fig. 1 in vergrößerter Darstellungsform.
- Fig. 4: die Einzelheit Y in Fig. 1 in vergrößerter Darstellungsform,
- Fig. 5: die Einzelheit Y bei einer Ablenkung des Lichts in eine andere Richtung,
- Fig. 6: die Draufsicht auf das Objektiv des lichtempfindlichen Empfängers mit einer Blende,
- Fig. 7: die Draufsicht auf das Objektiv des lichtempfindlichen Empfängers mit einer Blende gemäß einer anderen Ausführungsform,
- Fig. 8: die Draufsicht auf das Objektiv des lichtempfindlichen Empfängers mit einer Blende gemäß einer weiteren Ausführungsform,
- Fig. 9 a, b: die Seitenansicht und die Draufsicht auf das Objektiv des lichtempfindlichen Empfängers und auf ein optisches Mittel mit einem kontinuierlichen Transmissionsprofil,
- Fig. 10 a, b: die Seitenansicht und die Draufsicht auf das Objektiv des lichtempfindlichen Empfängers und auf ein optisches Mittel mit einem kontinuierlichen Transmissionsprofil gemäß einer anderen Ausführungsform,
- Fig. 11 a, b: die Seitenansicht und die Draufsicht auf das Objektiv des lichtempfindlichen Empfängers und auf ein optisches Mittel mit einem kontinuierlichen Transmissionsprofil gemäß einer weiteren Ausführungsform,
- Fig. 12: die Intensitätsprofile über die Breite des lichtempfindlichen Empfängers, die durch Blenden gemäß den Fig. 6 bis 8 erzeugt werden, und
- Fig. 13: die Transmissionsprofile über die Breite des lichtempfindlichen Empfängers, die durch die optischen Mittel gemäß den Fig. 9 bis 11 erzeugt werden.

Die in der Zeichnung dargestellte Vorrichtung zum optischen Prüfen von flächigen Gegenständen, insbesondere von kreisrunden Datendatenträgern 11, wie CDs, CD-Rs, DVDs oder dergleichen, weist eine Lichtquelle 12 zum Beleuchten des Datenträgers und einen lichtempfindlichen Empfänger 13 auf. Der Sensor 19 des lichtempfindlichen Empfängers wird von dem Licht belichtet, das von dem Gegenstand reflektiert wird. Grundsätzlich können auch durchsichtige Gegenstände im Durchlichtverfahren geprüft werden. Die Lichtquelle und der lichtempfindliche Empfänger befinden sich dann auf gegenüberliegenden Seiten des Gegenstandes.

Das Licht beleuchtet den Datenträger linienförmig in radialer Richtung über die radiale Erstreckung des Datenbereichs 21. Der Datenträger wird wenigstens einmal um seine Rotationsachse 22 gedreht, so daß zumindest der gesamte Datenbereich erfaßt werden kann. Der lichtempfindliche Empfänger 13 ist als Zeilenkamera mit einem zeilenförmigen lichtempfindlichen Sensor 19 ausgebildet. Der Sensor 19 ist mit seiner Längserstreckung parallel zur mittleren radialen Lichtlinie 31 ausgerichtet. Insoweit entspricht der gezeigte Aufbau einer herkömmlichen Vorrichtung zum optischen Abtasten von Datenträgern und bedarf an dieser Stelle keiner weiteren Erläuterung.

Im Lichtstrahlenverlauf 14, 15 entlang der optischen Achse 10 zwischen Lichtquelle 12 und lichtempfindlichem Empfänger 13 ist ein telezentrischer Aufbau vorgesehen, der wenigstens eine optische Linsenanordnung 16 in Strahlenrichtung hinter der Lichtquelle 12 und wenigstens eine optische Linsenanordnung 17 vor dem lichtempfindlichem Empfänger 13 umfaßt. Durch die Linsenanordnung 16 (Kondensor) wird aus dem der Lichtquelle emittierten Licht ein paralleles Lichtstrahlenbündel 14 erzeugt, das, bei einem fehlerfreien Gegenstand 11, als paralleles Lichtbündel 15 entlang der optischen Achse 10 des gesamten Aufbaus reflektiert wird. Es wird an dieser Stelle darauf hingewiesen, daß unter einem parallelen Lichtstrahlenbündel ein im wesentlichen paralleles oder quasi-paralleles Lichtstrahlenbündel entsprechend der physikalischen Möglichkeiten zu verstehen ist. Die Lichtquelle strahlt vorzugsweise eine weißes oder farbiges Licht verschiedener Wellenlängen aus. Die Lichtquelle kann beispielsweise eine divergentes Licht ausstrahlende Halogenlampe sein.

Das parallele Lichtstrahlenbündel wird durch die Linsenanordnung 17 (Achromat) in das Objektiv 18 des lichtempfindlichen Empfängers gebündelt und belichtet den lichtempfindlichen Sensor 19. Die optische Anordnung ist bezüglich der gewählten Brennweiten so getroffen, daß die Oberfläche des Gegenstandes scharf auf dem lichtempfindlichen Sensor abgebildet wird.

Bei dem in der Zeichnung dargestellten Ausführungsbeispiel wird der Gegenstand durch ein streifenförmiges Lichtstrahlenbündel 23 endlicher Breite bl beleuchtet, dessen auf den Gegenstand auftreffende tangentiale Breite bl größer ist als die zugeordnete Breite b2 des lichtempfindlichen Sensors 19. Hierdurch und den telezentrischen Aufbau wird erreicht, daß die optische Abtastung im wesentlichen unabhängig von einer Änderung in Strahlenrichtung ist. Lokale und kleine Verformung oder ein Höhenschlag bewirken eine kleine Änderung der reflektieren Lichtstrahlen noch im Toleranzbereich des Achromaten 17, so daß ein Punkt auf dem Gegenstand durch diesen Aufbau stets scharf auf dem Sensor 19 des lichtempfindlichen Empfängers 13 abgebildet. Es kann vorgesehen werden, daß insbesondere für das Abtasten optischer Datenträger die tangentiale Breite bl 1,0 bis 20,0 mm, vorzugsweise 7,5 bis 12,5 mm, und die Länge der radiale Breite des Datenbereichs entspricht oder größer ist. So können 30,0 - 50,0 mm zweckmäßig sein. Es kann vorgesehen werden, daß die Ausdehnung des auftreffenden Lichtbündels größer ist als die des Fehlers, der durch die Anordnung detektierbar ist.

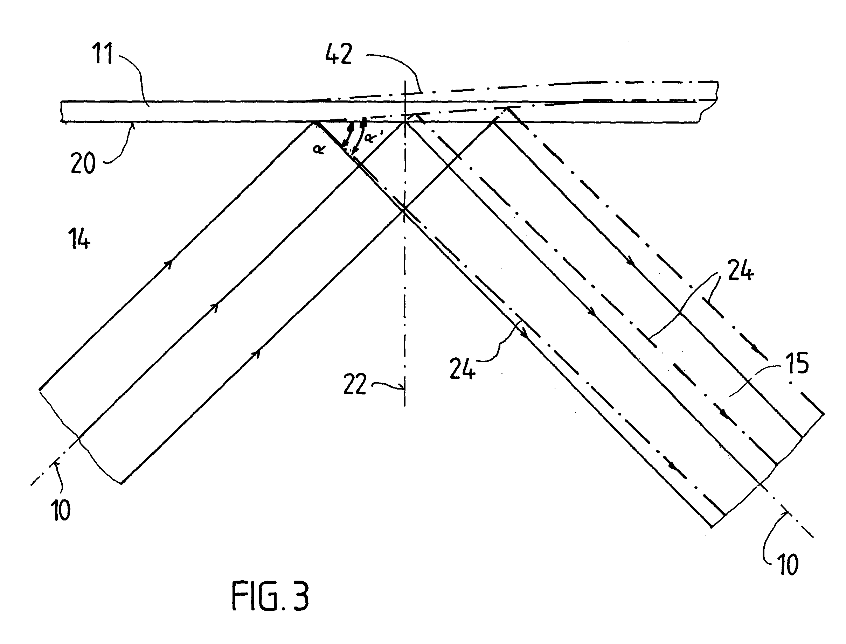

Das parallele Lichtstrahlenbündel 14 wird bei einem ebenen Gegenstand 11 in ein paralleles Lichtstrahlenbündel 15 in einem Normausfallwinkel α entlang einer Normausfallachse reflektiert. Die dargestellten reflektierten Lichtstrahlen 15 verlaufen parallel zu der optischen Achse 10 der optischen Anordnung. Wie insbesondere in Fig. 3 ersichtlich, werden, sofern der Gegenstand eine Verformung 42 aufweist, die auf den Gegenstand auftreffenden Lichtstrahlen nicht mehr in dieser Weise reflektiert, sondern zumindest in einem von dem Normausfallwinkel abweichenden Ausfallwinkel α'. Grundsätzlich sind alternativ oder zusätzlich auch Parallelverschiebungen des reflektierten Strahlenverlaufs denkbar. Zur Erläuterung ist in der Zeichnung eine vollständige Verschwenkung des reflektierten Strahlenbündels gezeigt. Die abweichend reflektierten Strahlen 24 sind in der Zeichnung strichpunktiert dargestellt.

Im weiteren Verlauf des telezentrischen Aufbaus treffen diese verschobenen oder verschwenkten Strahlen 24 in einem anderen Einfallwinkel und/oder entlang einer anderer Einfallachse auf die zweite optische Linsenanordnung 17 als die Strahlen 15. Aufgrund des optischen Toleranzbereiches dieser Linsenanordnung werden diese Strahlen 24 ebenfalls in einen Brennpunkt 25' in der Brennebene 25 des Objektivs 18 des lichtempfindlichen Empfängers gebündelt, in der auch die Strahlen 15 gebündelt werden, die in dem Normausfallwinkel entlang der Normausfallachse auf die Linsenanordnung 17 treffen. Es erfolgt eine scharfe Abbildung eines Teils des beleuchteten Bereichs des Gegenstandes auf den zeilenförmigen lichtempfindlichen Sensor 19.

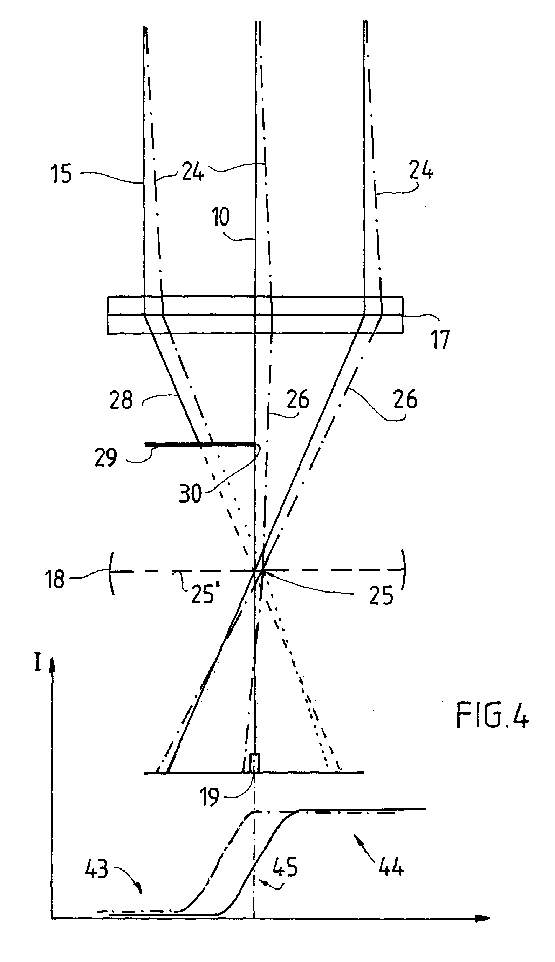

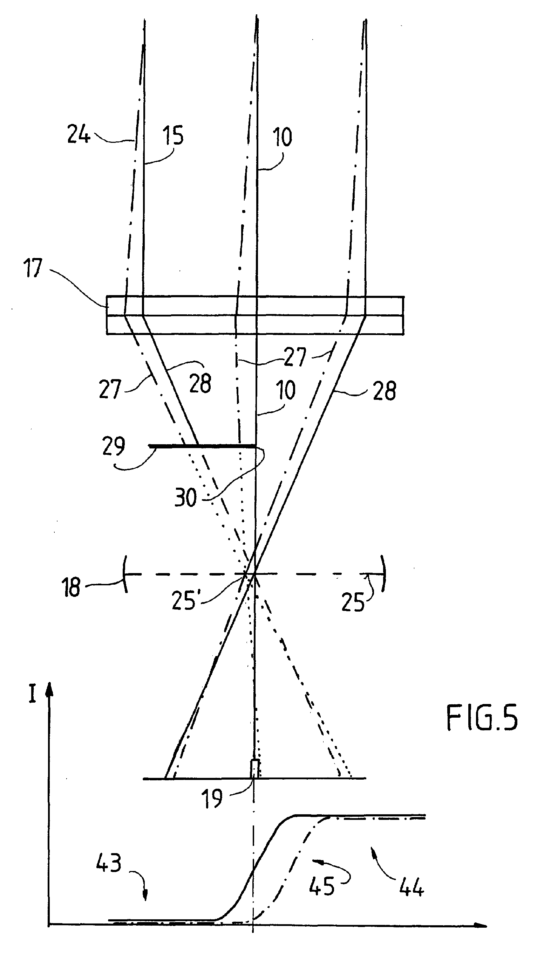

Allerdings gelangen die abweichenden Strahlen, ausgehend von der mittleren optischen Achse 10 in einer Richtung verschoben oder verschwenkt zu dem Brennpunkt 25'. Diese Strahlenverläufe 26 und 27 sind in den Fig. 4 und 5 vergrößert gezeigt, wobei auch hier die abweichenden Strahlen strichpunktiert dargestellt sind.

Dieser abweichende Strahlenverlauf wird ausgenutzt, um lokale Verformungen mit dem lichtempfindlichen Empfänger besser erfassen zu können. Es sind optisches Mittel 29, 32, 34, 36, 37, 39 vorgesehen, die in Abhängigkeit von dem Verlauf der reflektierten Lichtstrahlen deren Eigenschaften, insbesondere deren auf den lichtempfindlichen Empfänger einwirkende Intensität, verändern. Im einer ersten Ausführungsform umfassen die optische Mittel eine Blende 29, die im Lichstrahlenverlauf zwischen der optischen Linsenanordnung 17 und dem Objektiv 18 des lichtempfindlichen Empfängers angeordnet ist. Die Blendenkante 30 ist parallel über dem zeilenförmigen Sensor 19 des lichtempfindlichen Empfängers 13 ausgerichtet.

Die Blende 29 bewirkt eine Verteilung der Intensität des einfallenden Lichts über dem Sensor 19. Das erzeugte Intensitätsprofil ist in den Fig. 4 und 5 jeweils unterhalb des Sensors 19 in einem Diagram dargestellt. Es ist ein Bereich 43 geringer oder minimaler Intensität und ein Bereich 44 höherer oder maximaler Intensität vorhanden. Dazwischen weist die Intensitätsverteilung einen Übergangsbereich (Gradienten) 45 auf, der sich über eine endliche Breite senkrecht zum zeilenförmigen Sensor 19 erstreckt. Die Blende ist hierbei so ausgerichtet, daß sich dieser Übergangsbereich 45 über dem lichtempfindlichen Sensor befindet, sofern ein einwandfreier Gegenstand die Lichtstrahlen reflektiert hat. Es entsteht ein normal helles Bild, da eine mittlere Intensität den lichtempfindlichen Empfänger belichtet.

Wie in Fig. 4 gezeigt, nehmen bei einer Abweichung die gebündelten Lichtstrahlen 26 der reflektierten Strahlen 24 einen anderen Verlauf in Richtung auf den Brennpunkt 25' in der Brennebene 25 des Objektivs ein als die normal gebündelten Strahlen 28. Die abweichenden Strahlen verlaufen derart, daß das Intensitätsprofil so verschoben wird, daß nunmehr der Bereich 43 höherer Intensität über dem lichtempfindliche Empfänger liegt. Das verschobene Profil ist strichpunktiert dargestellt. Das Bild wird heller.

In Fig. 5 ist die Ablenkung der Lichtstrahlen in eine entgegengesetzte Richtung gezeigt. Die gebündelten Lichtstrahlen 27 erzeugen ein Intensitätsprofil, das gegenüber dem normalen Intensitätsprofil derart verschoben ist, daß der Bereich geringerer Intensität 44 über dem Sensor liegt. Das Bild wird dunkler.

Grundsätzlich wird sich in Abhängigkeit von dem Strahlenverlauf neben einer Verschiebung auch eine Veränderung des Verlaufs des Intensitätsprofils einstellen. In der Zeichnung ist der Übersichtlichkeit halber nur eine Verschiebung des Profils aufgrund der abweichend einfallenden Lichtstrahlen dargestellt.

Durch diese Ausrichtung der Blendenkante kann erreicht werden, daß bei abweichend reflektierten Lichtstrahlen sowohl in die eine Richtung als auch in die andere Richtung eine Veränderung der Helligkeit des Bildes entsteht, die erfaßt werden kann. Grundsätzlich kann die Blende aber auch anders positioniert sein, so daß nur Änderungen in einer Richtung erfaßt werden.

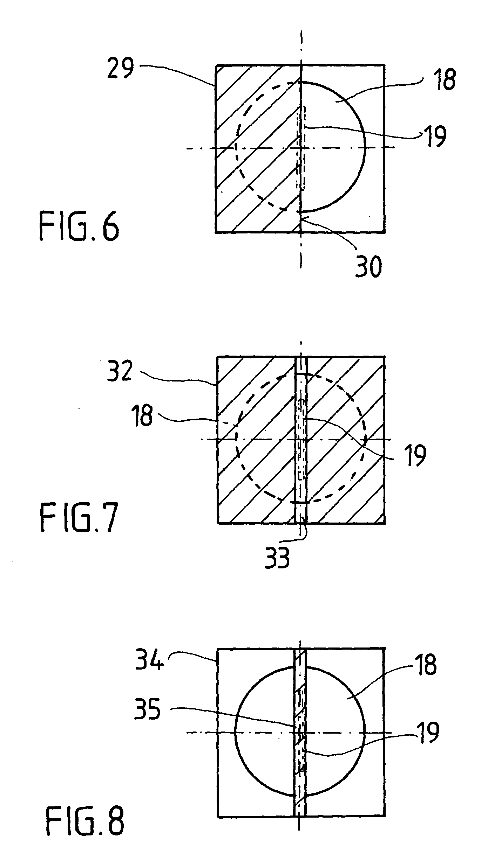

In den Fig. 7 und 8 sind in der Draufsicht andere Blenden dargestellt, die bei einer Abweichung des reflektierten Lichts eine Veränderung der auf den lichtempfindlichen Sensor einwirkenden Lichtintensität bewirken. Die Blende 32 gemäß Fig. 7 ist als Schlitzblende ausgebildet. Der lichtdurchlässige Schlitz 33 ist parallel über dem lichtempfindlichen Sensor 19 angeordnet. Das korrespondierende Intensitätsprofil weist ein lokales Maximum über dem lichtempfindlichen Sensor 19 auf. Hier wird der Lichteinfall bei einer Ablenkung sowohl in die eine als auch in die andere Richtung senkrecht zum zeilenförmigen Sensor 19 reduziert. Die Blende 34 gemäß Fig. 8 ist streifenförmig ausgebildet, wobei der lichtundurchlässige Streifen 35 parallel über dem lichtempfindlichen Sensor 19 ausgerichtet ist. Das korrespondierende Intensitätsprofil weist ein lokales Minimum über dem lichtempfindlichen Sensor 19 auf. Hier wird der Lichteinfall bei einer Ablenkung sowohl in die eine als auch in die andere Richtung senkrecht zum zeilenförmigen Sensor 19 erhöht.

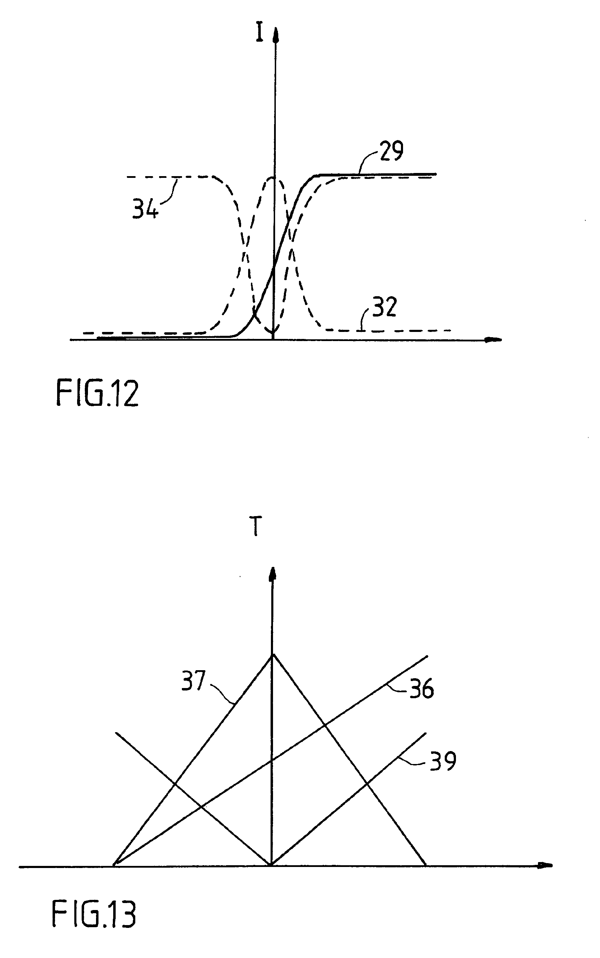

In Fig. 12 sind die Intensitätsprofile gezeigt, die durch die Blenden 29, 32 und 34 senkrecht zum lichtempfindlichen Sensor erzeugt werden. Je nach Abweichung des Lichteinfalls werden diese Profile nach links oder rechts verschoben, wodurch sich eine detektierbare Veränderung der Helligkeit ergibt. Es ist offensichtlich, daß die Veränderung der Helligkeit nach Überschreiten eines bestimmten Ausmaßes der Abweichung nicht mehr zunimmt.

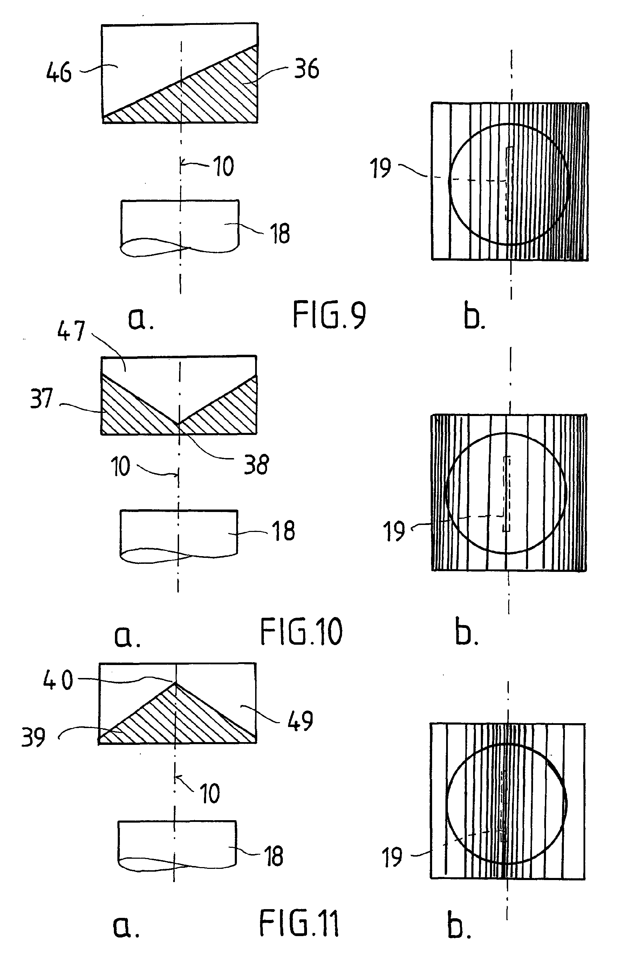

In den Fig. 9 bis 11 sind weitere optische Mittel dargestellt, die eine Veränderung des auf den lichtempfindlichen Sensor einwirkenden Lichteinfalls in Abhängigkeit von dem Einfallwinkel oder Einfallort des reflektierten Lichts auf das optische Mittel bewirken. Das optische Mittel gemäß Fig. 9 weist ein keilförmiges Prisma 36, das aus einem getönten Material besteht. Es ist für einen einheitlichen Lichtdurchgang ein gegenläufiges klares Prisma 46 darüber angeordnet, das ansonsten die gleichen optischen Eigenschaften aufweist. Das Prisma ist über den Objektiv 18 des lichtempfindlichen Empfängers angeordnet, wobei die optische Achse 10 etwa durch die Mitte des Prismas 36 verläuft. Der Verlauf der zunehmenden Dicke des Prismas ist dabei senkrecht zu dem zeilenförmigen Sensor 19 ausgerichtet. Hiermit wird erreicht, daß das Licht mit zunehmender Abweichung in eine Richtung, in der Fig. 9 nach rechts, eine stärkere Abschwächung erfährt. Bei zunehmender Abweichung in die andere Richtung erfährt das Licht eine stetig abnehmende Abschwächung.

Die Fig. 10 zeigt ein getöntes Prisma 37, das einen mittleren Bereich 38 mit minimaler Dicke aufweist. Auch hier ist ein gegenläufiges klares Prisma 47 vorgesehen, um einen einheitlichen Lichtdurchgang zu schaffen. Der Bereich minimaler Dicke ist parallel über dem Sensor 19 ausgerichtet. Durch eine solche Anordnung wird erreicht, daß das Licht unabhängig von der Richtung der Abweichung einer stärkere Abschwächung mit zunehmenden Ausmaß der Abweichung erfährt. Fig. 11 zeigt ein Prisma 39 mit umgekehrter Wirkung. Hier befindet sich der mittlere Bereich 40 mit einer maximale Dicke parallel über dem Sensor 19. Auch hier ist ein gegenläufiges klares Prisma 49 vorgesehen, um einen einheitlichen Lichtdurchgang zu schaffen. Bei zunehmender Abweichung unabhängig von der Richtung erfährt das einfallende Licht eine abnehmende Abschwächung.

Die Prismen 36, 37, 39 bestehen vorzugsweise aus einem Material mit gleichförmiger Tönung, so daß die stärker werdende Tönung durch eine größer werdende Dicke erzeugt werden kann. Grundsätzlich können auch Filter vorgesehen werden, die eine sich in wenigstens eine Richtung senkrecht zum Sensor 19 verändernde Tönung aufweisen. Diese sich verändernde Tönung kann durch Photolithographie oder durch Drucktechniken erzeugt werden. Auch muß die sich verändernde Tönung nicht linear sein.

In Fig. 13 sind die Transmissionsprofile über der Breite des lichtempfindlichen Empfängers dargestellt, die durch die optischen Prismen 36, 37 und 39 erzeugt werden. Die Ordinate entspricht der optischen Achse 10, und die Transmissionsprofile sind mit den Bezugsziffern der Prismen gekennzeichnet. Mit zunehmender Abweichung des Lichtstrahls, also größer werdendem Differenzwinkel zum Normeinfallwinkel oder zunehmenden Abstand zur optischen Achse, wird der Transmissionsgrad größer oder kleiner, und die Intenstität des einfallenden Lichts nimmt stetig zu- oder ab.

Eine andere Veränderung des einfallenden Lichts kann durch optische Prismen im Lichtstrahlengang erreicht werden, die bei einem vom Normeinfallwinkel abweichenden Lichtstrahl eine Totalreflektion oder eine Brechung desselben in eine andere Richtung bewirken. Auch hier wird sich ein Intensitätsprofil in Abhängigkeit einstellen, dessen Verschiebung aufgrund der Abweichung detektierbar ist.

Die Veränderung des auf den Sensor 19 einfallenden Lichts stellt sich unabhängig von der Ausdehnung der Verformung auf der abgetasteten Fläche des Gegenstandes ein. Es führen auch solche Verformungen zu einer Veränderung des Lichts, die sich über den gesamten Halbmesser des Gegenstandes erstrecken. Es ist vorgesehen, daß die Veränderung des einfallenden Lichts nachgeregelt wird, sofern diese entlang des gesamten oder zumindest näherungsweise gesamten Sensors erfolgt. Der Sensor 19 weist grundsätzlich eine Vielzahl von lichtempfindlichen Pixeln auf, die entlang einer Zeile angeordnet sind. Jedem Pixel ist eine bestimmter Bereich oder Radius des Gegenstandes zugeordnet. Tritt nun eine großflächig Verformung des Gegenstandes auf, wirkt sich die hieraus resultierende Veränderung des Lichts auf alle Pixel des Sensors aus. Dies kann unmittelbar rechnerisch erkannt und ausgeglichen werden. Eine einheitlich helle Darstellung des Gegenstandes kann somit erhalten werden.

Für kleine und lokale Verformungen 41, die nur eine flächige Ausdehnung aufweisen, werden nur ein oder eine geringe Anzahl von Pixeln von der Veränderung des einfallenden Lichts betroffen. Durch pixelweises Auslesen und Auswerten wird diese lokale Verformung unmittelbar erkannt werden können. Es kann vorgesehen werden, daß eine Nachregelung der bewirkten Änderung dann erfolgt, wenn eine vorbestimmte Anzahl von Pixeln die gleiche Veränderung erfaßt. Die Anzahl der Pixel kann auch kleiner als die Gesamtzahl der Pixel des Sensors sein.

Vorstehend wurde der Aufbau und der erzielte Effekt anhand eines zeilenförmigen Sensors des lichtempfindlichen Empfängers beschrieben. Selbstverständlich kann der lichtempfindliche Empfänger auch einen matrixförmigen Empfänger aufweisen. Hier wird die Verschiebung des erzeugten Profils vollständig erfaßt und kann ausgewertet werden. Auch ist bei einem matrixförmigen Empfänger möglich, nur eine oder eine vorbestimmte Anzahl von Pixel, beispielsweise Pixel in parallelen Zeilen oder Bereiche der Matrix, zur Auswertung heranzuziehen.

## Patentansprüche

1. Verfahren zum optischen Erkennen von Fehlern, wie lokalen Verformungen (41) oder Bläschen, in einem Gegenstand, insbesondere einem optischen Datenträger (11), bei welchem Verfahren der Gegenstand von wenigstens einer Lichtquelle (12) mit Licht beleuchtet wird und das von dem Gegenstand reflektierte oder durchgelassene Licht (15) von wenigstens einem lichtempfindlichen Empfänger (13) aufgenommen wird, wobei bei einem einwandfreien Gegenstand das Licht von dem Gegenstand in einem Normausfallwinkel (α) entlang einer Normausfallachse (15) reflektiert oder durchgelassen wird, dadurch gekennzeichnet, daß vor dem lichtempfindlichen Empfänger wenigstens eine Eigenschaft wenigstens eines Teils des auf diesen einfallenden Lichts verändert wird, wenn das Licht entlang einer von der Normausfallachse abweichenden Ausfallachse (24) und/oder mit einem von dem Normausfallwinkel abweichenden Ausfallwinkel (α') von dem Gegenstand reflektiert oder durchgelassen wird.

2. Verfahren nach Anspruch 1, dadurch gekennzeichnet, daß das auf den lichtempfindlichen Empfänger einfallende Licht in seiner Intensität und/oder Polarisation verändert wird und/oder wenigstens eine Wellenlänge oder ein Wellenlängenbereich ausgefiltert werden.

3. Vorrichtung nach Anspruch 1 oder 2, dadurch gekennzeichnet, daß über dem lichtempfindlicher Empfänger ein Eigenschaftsprofil, insbesondere ein Intensitätsprofil, des einfallenden Lichts mit einem Gradienten (45) oder einem lokalen Maximum oder Minimum erzeugt wird, wenn das Licht in dem Normausfallwinkel entlang der Normausfallachse von dem Gegenstand (11) reflektiert oder durchgelassen worden ist, wobei das Profil in Abhängigkeit von der Abweichung des reflektierten oder durchgelassenen Lichts relativ zum lichtempfindlichen Empfänger verschoben und/oder verändert wird.

4. Verfahren nach einem der Ansprüche 1 bis 3, dadurch gekennzeichnet, daß die Veränderung in Abhängigkeit von der Abweichung stetig oder im wesentlichen sprunghaft erfolgt.

5. Verfahren nach einem der Ansprüche 1 bis 4, dadurch gekennzeichnet, daß die Intensität des einfallenden Lichts verringert wird, wenn das Licht in einem in die eine Richtung abweichenden Ausfallwinkel und/oder entlang einer in dieser einen Richtung verschobenen Ausfallachse reflektiert oder durchgelassen wird, und daß die Intensität des einfallenden Lichts steigt, wenn das Licht in einem in die andere Richtung abweichenden Ausfallwinkel und/oder entlang einer in dieser anderen Richtung verschobenen Ausfallachse reflektiert oder durchgelassen wird.

6. Verfahren nach einem der Ansprüche 1 bis 4, dadurch gekennzeichnet, daß das einfallende Licht zu einem größeren Teil ausgeblendet wird, wenn das Licht in einem in die eine Richtung abweichenden Ausfallwinkel und/oder entlang einer in dieser einen Richtung verschobenen Ausfallachse reflektiert oder durchgelassen wird, und daß das einfallende Licht zu einem größeren Teil zu dem lichtempfindlichen Empfänger durchgelassen wird, wenn das Licht in einem in die andere Richtung abweichenden Ausfallwinkel und/oder entlang einer in dieser anderen Richtung verschobenen Ausfallachse reflektiert oder durchgelassen wird.

7. Verfahren nach einem der Ansprüche 1 bis 4, dadurch gekennzeichnet, daß die Intensität des einfallenden Lichts verringert wird, wenn das Licht in einem in eine beliebige Richtung abweichenden Ausfallwinkel und/oder entlang einer in eine beliebige Richtung verschobenen Ausfallachse reflektiert oder durchgelassen wird.

8. Verfahren nach einem der Ansprüche 1 bis 4, dadurch gekennzeichnet, daß die Intensität des einfallenden Lichts steigt, wenn das Licht in einem in eine beliebige Richtung abweichenden Ausfallwinkel oder entlang einer in eine beliebige Richtung verschobenen Ausfallachse reflektiert oder durchgelassen wird.

9. Verfahren nach einem der Ansprüche 1 bis 8, dadurch gekennzeichnet, daß der lichtempfindliche Empfänger wenigstens einen zeilenförmigen optisch aktiven Sensor (19) aufweist, und daß die Veränderungen des einfallenden Lichts bei einer Abweichung in einer Richtung senkrecht zu der Erstreckung des zeilenförmigen Sensors erfolgt.

10. Verfahren nach einem der Ansprüche 1 bis 9, dadurch gekennzeichnet, daß der Gegenstand mit wenigstens einem im wesentlichen parallelen Lichtstrahlenbündel (14) beleuchtet wird.

11. Verfahren nach einem der Ansprüche 1 bis 10, dadurch gekennzeichnet, daß die auf den Gegenstand auftreffende Breite (b1) des auftreffenden Lichtstrahlenbündels (14) größer ist als die optisch aktive Breite (b2) des lichtempfindlichen Sensors (19).

12. Verfahren nach einem der Ansprüche 1 bis 11, dadurch gekennzeichnet, daß das reflektierte oder durchgelassene Licht im wesentlichen unabhängig von dem Ausfallwinkel und/oder der Ausfallachse in das Objektiv des lichtempfindlichen Empfängers gebündelt wird.

13. Verfahren nach einem der Ansprüche 1 bis 12, dadurch gekennzeichnet, daß die Veränderung der Eigenschaft des einfallenden Lichts zwischen der Bündelung und dem Objektiv des lichtempfindlichen Empfängers erfolgt.

14. Verfahren nach einem der Ansprüche 1 bis 13, dadurch gekennzeichnet, daß der Gegenstand mittels eines Lichtstreifens beleuchtet wird und der reflektierte oder durchgelassene Lichtstreifen einen zeilenförmigen optisch aktiven Sensor des lichtempfindlichen Empfängers belichtet, und daß bei einer Veränderung wenigstens einer Eigenschaft des einfallenden Lichts über der gesamten oder näherungsweise der gesamten Länge des zeilenförmigen Sensors des lichtempfindlichen Empfängers die Veränderung nachgeregelt, insbesondere ausgeglichen wird.

15. Vorrichtung zum optischen Erkennen von Fehlern, wie von lokalen Verformungen (41) oder Bläschen, in einem Gegenstand, insbesondere einem optischen Datenträger (11), mit wenigstens einer Lichtquelle, die den Gegenstand (11) mit Licht beleuchtet, und mit wenigstens einem lichtempfindlichen Empfänger (13), der das von dem Gegenstand reflektierte oder durchgelassene Licht empfängt, wobei bei einem einwandfreien Datenträger das Licht in einem Normausfallwinkel (α) oder entlang einer Normausfallachse (15) von dem Gegenstand reflektiert oder durchgelassen wird, dadurch gekennzeichnet, daß vor dem lichtempfindlichen Empfänger (13) wenigstens ein optisches Mittel (29, 32, 34, 36, 37, 39) vorgesehen ist, durch das zumindest ein Teil des auf den lichtempfindlichen Empfänger einfallenden Lichts in wenigstens einer seiner Eigenschaften und/oder Intensität verändert wird, wenn das reflektierte oder durchgelassene Licht auf das optische Mittel in einem zu dem Normausfallwinkel korrespondierenden Normeinfallwinkel abweichenden Einfallwinkel (α') und/oder entlang einer zu der Normausfallachse korrespondierenden Normeinfallachse (28) abweichenden Einfallachse (26, 27) auftrifft.

16. Vorrichtung nach Anspruch 15, dadurch gekennzeichnet, daß der lichtempfindliche Empfänger wenigstens einen zeilenförmigen optisch aktiven Sensor (19) aufweist, und daß die optischen Mittel (29, 32, 34, 36, 37, 39) eine Veränderung des einfallenden Lichts bei einer Abweichung in einer Richtung senkrecht zu der Erstreckung des zeilenförmigen Sensors (19) erfolgt.

17. Vorrichtung nach Anspruch 15 oder 16, dadurch gekennzeichnet, daß das optische Mittel in Abhängigkeit von der Abweichung eine stetige oder nahezu sprunghafte Veränderung des einfallenden Lichts bewirkt.

18. Vorrichtung nach einem der Ansprüche 15 bis 17, dadurch gekennzeichnet, daß das optische Mittel (36, 37, 39) ein Transmissionsprofil aufweist, dessen Transmission in Abhängigkeit vom Einfallwinkel und/oder der Einfallachse des Lichts auf das optische Mittel variiert.

19. Vorrichtung nach einem der Ansprüche 15 bis 17, dadurch gekennzeichnet, daß das optische Mittel (36) ein Transmissionsprofil aufweist, das, ausgehend von dem Normeinfallwinkel und der Normeinfallachse, eine sich in die eine Richtung verringernde Transmission aufweist, wenn das Licht in einem in diese Richtung abweichenden Einfallwinkel und/oder Einfallachse auftrifft, und eine in die andere Richtung steigende Transmission aufweist, wenn das Licht in einem in diese andere Richtung abweichenden Einfallwinkel und/oder Einfallachse auftrifft.

20. Vorrichtung nach einem der Ansprüche 15 bis 17, dadurch gekennzeichnet, daß das optische Mittel (39, 37) ein Transmissionsprofil aufweist, das, ausgehend von dem Normeinfallwinkel und der Normeinfallachse, eine sich verringernde beziehungsweise steigende Transmission aufweist, wenn das Licht in einem abweichenden Einfallwinkel und/oder einer abweichenden Normeinfallachse auf den lichtempfindlichen Empfänger auftrifft.

21. Vorrichtung nach einem der Ansprüche 15 bis 20, dadurch gekennzeichnet, daß das optische Mittel als Blende (29) ausgebildet ist, die, ausgehend von der Normeinfallachse und des Normeinfallwinkels, eine Seite des lichtempfindlichen Empfängers abdeckt derart, daß Licht mit einem in diese Richtung abweichenden Einfallwinkel und/oder Einfallachse abgeschirmt wird, während ein in die anderer Richtung abweichendes Licht durchgelassen wird.

22. Vorrichtung nach einem der Ansprüche 15 bis 21, dadurch gekennzeichnet, daß das optische Mittel als Farbfilter oder Polarisationsfilter ausgebildet ist, das, ausgehend von der Normeinfallachse und des Normeinfallwinkels, eine Seite des lichtempfindlichen Empfängers abdeckt derart, daß aus dem Licht mit einem in diese Richtung abweichenden Einfallwinkel und/oder Einfallachse eine Wellenlänge oder ein Wellenlängenbereich ausgefiltert oder polarisiert werden, während ein in die anderer Richtung abweichendes Licht durchgelassen oder davon abweichend gefiltert oder polarisiert wird.

23. Vorrichtung nach einem der Ansprüche 14 bis 22, dadurch gekennzeichnet, daß die Blende (29, 32, 34) parallel zum zeilenförmigen Sensor (19) des lichtempfindlichen Empfängers (13) ausgerichtet ist.

24. Vorrichtung nach Anspruch 15 bis 23, dadurch gekennzeichnet, daß das optische Mittel (29, 32, 34) ein Eigenschaftsprofil, insbesondere ein Intensitätsprofil des einfallenden Lichts mit einem Gradienten (45) oder einem lokalen Maximum oder Minimum über dem lichtempfindlichen Empfänger erzeugt, wenn das Licht in dem Normausfallwinkel entlang der Normausfallachse von dem Gegenstand (11) reflektiert oder durchgelassen worden ist, wobei das Profil in Abhängigkeit von der Abweichung des reflektierten oder durchgelassenen Lichts relativ zum lichtempfindlichen Empfänger aufgrund des optischen Mittels verschoben und/oder verändert wird.

25. Vorrichtung nach einem der Ansprüche 15 bis 24, dadurch gekennzeichnet, daß das optische Mittel eine Schlitzblende (32) ist, deren Schlitz (33) parallel über den zeilenförmigen Sensor (19) des lichtempfindlichen Empfängers angeordnet ist.

26. Vorrichtung nach einem der Ansprüche 15 bis 25, dadurch gekennzeichnet, daß das optische Mittel eine linienförmige Blende (34) umfaßt, deren lichtundurchlässiger Streifen (35) parallel über dem zeilenförmigen optischen Sensor (19) des lichtempfindlichen Empfängers ausgerichtet ist.

27. Vorrichtung nach einem der Ansprüche 15 bis 26, dadurch gekennzeichnet, daß das optische Mittel (36) ein sich in eine Richtung senkrecht zum zeilenförmigen Sensor des lichtempfindlichen Empfängers eine zunehmende Tönung aufweist, wobei sich das optische Mittel zumindest teilweise über das Objektiv des lichtempfindlichen Empfängers erstreckt und die Tönung von der einen zur anderen Seite des Objektivs zunimmt.

28. Vorrichtung nach einem der Ansprüche 15 bis 26, dadurch gekennzeichnet, daß das optische Mittel (39, 37) ein sich sowohl in eine Richtung als auch in die entgegengesetzte Richtung senkrecht zum zeilenförmigen Sensor des lichtempfindlichen Empfängers eine abnehmende oder zunehmende Tönung aufweist, wobei sich das optische Mittel zumindest teilweise über das Objektiv des lichtempfindlichen Empfängers erstreckt und die Linie mit der minimalen beziehungsweise maximalen Tönung über dem zeilenförmigen Sensor des lichtempfindlichen Empfängers angeordnet ist.

29. Vorrichtung nach einem der Ansprüche 15 bis 28, dadurch gekennzeichnet, daß das Licht ein im wesentlichen paralleles Lichtstrahlenbündel ist.

30. Vorrichtung nach einem der Ansprüche 15 bis 29, dadurch gekennzeichnet, daß die Breite (b1) des auf den Gegenstand auftreffenden Lichtbündels größer ist als die optisch aktive Breite (b2) des Sensors des lichtempfindlichen Empfängers.

31. Vorrichtung nach einem der Ansprüche 15 bis 30, dadurch gekennzeichnet, daß vor dem lichtempfindlichen Empfänger eine optische Linsenanordnung (17) vorgesehen ist, die das einfallende Licht im wesentlichen unabhängig von dem Einfallwinkel und der Einfallachse in das Objektiv des lichtempfindlichen Empfängers bündelt, wobei das optische Mittel zum Verändern der Eigenschaften des einfallenden Lichts zwischen der optischen Linsenanordnung und dem Objektiv angeordnet ist.

32. Vorrichtung nach einem der Ansprüche 15 bis 31, gekennzeichnet durch einen telezentrischen Aufbau, wobei der Gegenstand im parallelen Strahlenverlauf (14, 15) des telezentrischen Aufbaus angeordnet ist.
